(19) Europäisches Patentamt
European Patent Office
Office européen des brevets

(11) **EP 4 576 689 A1**

(12) **EUROPEAN PATENT APPLICATION**
published in accordance with Art. 153(4) EPC

(43) Date of publication:
**25.06.2025   Bulletin 2025/26**

(21) Application number: **22955411.8**

(22) Date of filing: **19.08.2022**

(51) International Patent Classification (IPC):
***H04L 27/00*** (2006.01)

(52) Cooperative Patent Classification (CPC):
**H04L 27/00**

(86) International application number:
**PCT/CN2022/113738**

(87) International publication number:
**WO 2024/036631 (22.02.2024 Gazette 2024/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventors:
• **CHEN, Dong
  Beijing 100085 (CN)**
• **CHI, Liangang
  Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **INFORMATION FEEDBACK METHOD AND APPARATUS, DEVICE, AND STORAGE MEDIUM**

(57)     The present disclosure provides an information feedback method and apparatus, a device, and a storage medium. The method comprises: obtaining a channel state information (CSI) matrix; determining a feature map and a position map of the CSI matrix; determining a feature position map on the basis of the feature map, the position map, and the normalized power of the feature map, wherein elements in the feature position map are used for indicating an element value in the CSI matrix and the position, in the CSI matrix, of the element value in the CSI matrix; and feeding back the feature position map and the normalized power to a base station. According to the method provided by the present disclosure, the feedback overhead is low, the interaction overhead of a terminal device and the base station is greatly reduced, and the lightweight processing of the terminal device can be well realized.

FIG. 2a

- obtaining a channel state information (CSI) information matrix — 201
- determining a feature map and a position map of the CSI information matrix — 202
- determining a feature position map based on the feature map, the position map and a normalized power of the feature map — 203
- feeding back the feature position map and the normalized power to the base station — 204

EP 4 576 689 A1

**Description**

**TECHNICAL FIELD**

The present disclosure relates to a field of communication technology, and specifically to an information feedback method and apparatus, a device and a storage medium.

**BACKGROUND**

Since the massive multiple-input multiple-output (m-MIMO) technology has good stability, energy utilization, and anti-interference capability, m-MIMO systems are usually used for wireless communications. In the m-MIMO system, a terminal usually needs to feed back a channel state information (CSI) information matrix of a downlink to a base station, so that the base station can determine a channel quality of the downlink based on the CSI information matrix. Due to a large number of antennas at the base station in the m-MIMO system, the number of corresponding downlinks at the base station is also large, resulting in a large overhead of feeding back the CSI information matrix. Therefore, a low-overhead information feedback method is urgently needed.

In the related art, the method for the UE to feed back the CSI information matrix mainly includes the followings.

Method 1: a CSI feedback method based on channel spatial correlation. This method uses an antenna grouping beamforming (AGB) algorithm to divide channel elements with spatial correlation into several clusters, and map the multiple channel elements in each cluster into a single characterization value. Meanwhile, there are several group modes according to different cluster division methods. The selected group mode and characterization value are fed back to a transmitter (such as the base station) through a feedback link for CSI reconstruction.

Method 2: a spatial domain CSI matrix is transformed into an angular domain CSI matrix through two-dimensional discrete Fourier transform (DFT), then real and imaginary parts of the CSI matrix are separated to obtain a two-dimensional CSI image, and a principal value part of the CSI image is extracted, and the extracted CSI image is used as an input of a deep learning (DL) network for training. An encoder is deployed on the terminal to compress the extracted CSI image into a low-dimensional codeword and send it to the base station, and a decoder is deployed at the base station to restore the compressed low-dimensional codeword into the corresponding CSI image to obtain the reconstructed channel. Finally, the reconstructed channel is subjected to the inverse two-dimensional DFT to obtain the original spatial-frequency domain CSI matrix. This method requires offline training and parameter updating of the DL network to enable the reconstructed channel to get as close as possible to the original angular domain channel, and the trained DL network model is applied to online deployment applications.

The Method 1 cannot achieve accurate CSI compression and feedback for channels with small spatial correlation. In addition, the algorithm complexity of the Method 1 is high, and as the number of transmitter antennas increases, the number of clusters increases, and the feedback overhead is still huge. In the Method 2, due to a huge number of parameters of the DL network, a large amount of interactive transmission overhead is required when updating the parameters of the decoder at the terminal. Further, when the network needs to be frequently updated to adapt to a physical environment, transmission errors are prone to occur and the network parameter update errors may occur, which affect an accuracy of information feedback. In addition, in the DL solution in the Method 2, due to the collaborative nature, the DL network at the terminal has one-to-one correspondence with the DL network at the base station. Due to the limited computing power of the terminal, the overall network scale is small, so that a large scale of networks cannot be fully deployed on the base station to give full play to the powerful processing capabilities of the base station, thus resulting in poor flexibility and low accuracy of information feedback.

**SUMMARY**

The present disclosure provides an information feedback method and apparatus, a device and a storage medium, to propose a high accuracy, low interactive overhead, network lightweight information feedback method.

According to a first aspect of the embodiments of the present disclosure, an information feedback method is provided, performed by a terminal, including: obtaining a channel state information (CSI) information matrix; determining a feature map and a position map of the CSI information matrix; determining a feature position map based on the feature map, the position map, and a normalized power of the feature map, in which elements in the feature position map indicate element values in the CSI information matrix and positions of the element values in the CSI information matrix; and feeding back the feature position map and the normalized power to a base station.

In the present disclosure, an information feedback method is provided. The terminal may obtain the CSI information matrix and determine the feature map and the position map of the CSI information matrix, the terminal may determine the feature position map based on the feature map, the position map, and the normalized power of the feature map. The elements in the feature position map indicate the element values in the CSI information matrix and the positions of the element values in the CSI information matrix. Finally, the terminal may feedback the feature position map and the normalized power to the base station. In the method of the present disclosure, since the elements in the feature position map determined by the terminal indicate the element values in the CSI information matrix and the positions of the element values in the CSI information matrix, the terminal merely needs to feedback the feature position map and the normalized power to the base station without feeding back position information additionally, and the base station may successfully restore the CSI information matrix based on the feature position map and the normalized power, thus ensuring that the feedback overhead is reduced on the basis of the base station actually restoring the CSI information matrix. Further, in the method of the present disclosure, the terminal does not require the neural network when determining the feature position map and the normalized power, but only requires parameters such as "a pooling step size and a compression rate", so that the base station only needs to configure the pooling step size and the compression rate for the terminal without configuring or updating the neural network. Since the data amount of parameter information of the neural network is significantly greater than the data amount corresponding to the pooling step size and the compression rate, the method of the present disclosure greatly reduces the interactive overhead of the terminal and the base station. Also, since no neural network needs to be deployed at the terminal, lightweight processing of the terminal may be better achieved.

According to a second aspect of the embodiments of the present disclosure, an information feedback method is provided, performed by a base station, including: obtaining a feature position map and a normalized power fed back by a terminal, in which elements in the feature position map indicate element values in a channel state information (CSI) information matrix and positions of the element values in the CSI information matrix; determining a feature map and a position map based on the feature position map and the normalized power, and determining a coarse-grained CSI information matrix based on the feature map and the position map; and restoring the CSI information matrix based on the coarse-grained CSI information matrix.

According to a third aspect of the embodiments of the present disclosure, a communication apparatus is provided. The communication apparatus is configured in a terminal. The communication apparatus may include a processing module, configured to: obtain a channel state information (CSI) information matrix; determine a feature map and a position map of the CSI information matrix; determine a feature position map based on the feature map, the position map, and a normalized power of the feature map, wherein elements in the feature position map indicate element values in the CSI information matrix and positions of the element values in the CSI information matrix; and a transceiver module, configured to feed back the feature position map and the normalized power to a base station.

According to a fourth aspect of the embodiments of the present disclosure, a communication apparatus is provided. The communication apparatus is configured in a base station. The communication apparatus may include a transceiver module, configured to obtain a feature position map and a normalized power fed back by a terminal, wherein elements in the feature position map indicate element values in a channel state information (CSI) information matrix and positions of the element values in the CSI information matrix; and a processing module, configured to: determine a feature map and a position map based on the feature position map and the normalized power, determine a coarse-grained CSI information matrix based on the feature map and the position map; and restore the CSI information matrix based on the coarse-grained CSI information matrix.

According to a fifth aspect of the embodiments of the present disclosure, a communication apparatus including a processor. When a computer program stored in a memory is called by the processor, the method described in the first aspect is implemented.

According to a sixth aspect of the embodiments of the present disclosure, a communication apparatus including a processor. When a computer program stored in a memory is called by the processor, the method described in the second aspect is implemented.

According to a seventh aspect of the embodiments of the present disclosure, a communication apparatus including a processor and a memory for storing a computer program is provided. When the computer program stored in a memory is executed by the processor, the communication apparatus is caused to implement the method described in the first aspect.

According to an eighth aspect of the embodiments of the present disclosure, a communication apparatus including a processor and a memory for storing a computer program is provided. When the computer program stored in a memory is executed by the processor, the communication apparatus is caused to implement the method described in the second aspect.

According to a ninth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the first aspect.

According to a tenth aspect of the embodiments of the present disclosure, a communication apparatus is provided, including a processor and an interface circuit for receiving code instructions and sending the code instructions to the processor, in which the processor is configured to execute the code instructions to cause the apparatus to perform the method described in the second aspect.

According to an eleventh aspect of the embodiments of the present disclosure, a communication system is provided, in which the system includes the communication apparatus described in the third aspect and the communication apparatus described in the fourth aspect, or the communication apparatus described in the fifth aspect and the communication apparatus described in the sixth aspect, or the communication apparatus described in the seventh aspect and the communication apparatus described in the eighth aspect, or the communication apparatus described in the ninth aspect and the communication apparatus described in the tenth aspect.

According to a twelfth aspect of the embodiments of the present disclosure, a computer-readable storage medium for storing instructions used by the base station and/or the terminal is provided. When the instructions are executed, the base station is caused to implement the method described in the first aspect, and/or the terminal is caused to implement the method described in the second aspect.

According to a thirteenth aspect of the embodiments of the present disclosure, a computer program product including a computer program is provided. When the computer program is running on a computer, the computer is caused to perform the method described in the first aspect or the second aspect.

According to a fourteenth aspect of the embodiments of the present disclosure, a chip system is provided, including at least one processor and an interface configured to support the base station to perform the functions in the first aspect or support the terminal to perform the functions in the second aspect, for example, at least one of determining or processing data and information in the above method. In one possible design, the chip system also includes a memory for saving a computer program and data necessary for the source secondary node. The chip system may include a chip, or a chip and other discrete devices.

According to a fifteenth aspect of the embodiments of the present disclosure, a computer program is provided. When the computer program is running on a computer, the computer is caused to implement the method described in the first aspect or the second aspect.

## BRIEF DESCRIPTION OF THE DRAWINGS

The above and/or additional aspects and advantages of the present disclosure will become apparent and easily understood from the following description of the embodiments in conjunction with the accompanying drawings, in which:

FIG. 1 is a schematic diagram of a communication system according to an embodiment of the present disclosure;
FIG. 2a is a flowchart of an information feedback method according to an embodiment of the present disclosure;
FIG. 2b is a schematic diagram of an information feedback method according to an embodiment of the present disclosure;
FIG. 3a is a flowchart of an information feedback method according to an embodiment of the present disclosure;
FIG. 3b is a schematic diagram of an information feedback method according to an embodiment of the present disclosure;
FIG. 3c is a flowchart of an information feedback method according to an embodiment of the present disclosure;
FIG. 4 is a flowchart of an information feedback method according to another embodiment of the present disclosure;
FIG. 5 is a block diagram of a communication apparatus according to an embodiment of the present disclosure;
FIG. 6 is a block diagram of a communication apparatus according to another embodiment of the present disclosure;
FIG. 7 is a block diagram of a communication apparatus according to an embodiment of the present disclosure;
FIG. 8 is a block diagram of a chip according to an embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of this embodiments of the present disclosure, the first message may also be referred to as the second information, and likewise the second information may be referred to as the first message. Depending on the context, the words "if" and "in a case" used here may be interpreted as "when" or "in response to determining".

Embodiments of the present disclosure are described in detail below, examples of which are illustrated in the accompanying drawings. The same or similar reference numerals refer to the same or similar elements throughout. The embodiments described below with reference to the accompanying drawings are exemplary and intended to explain the present disclosure and are not to be construed as limitations of the present disclosure.

For ease of understanding, the terms involved in the disclosure are introduced firstly.

1. Channel State Information (CSI)

CSI is a general concept that includes a channel matrix. As long as it reflects the channel, it is called the channel state information. The channel matrix is just a kind of channel state information in a MIMO system. Other information, such as channel profile, multipath delay, Doppler frequency offset, MIMO channel rank, beam forming vector, etc., belongs to the channel state information. The current channel matrix H may be regarded as only one kind of channel state information, but it is the most commonly used.

In order to better understand an information feedback method in the embodiments of the present disclosure, a communication system to which the embodiments of the present disclosure are applicable is firstly described as follows.

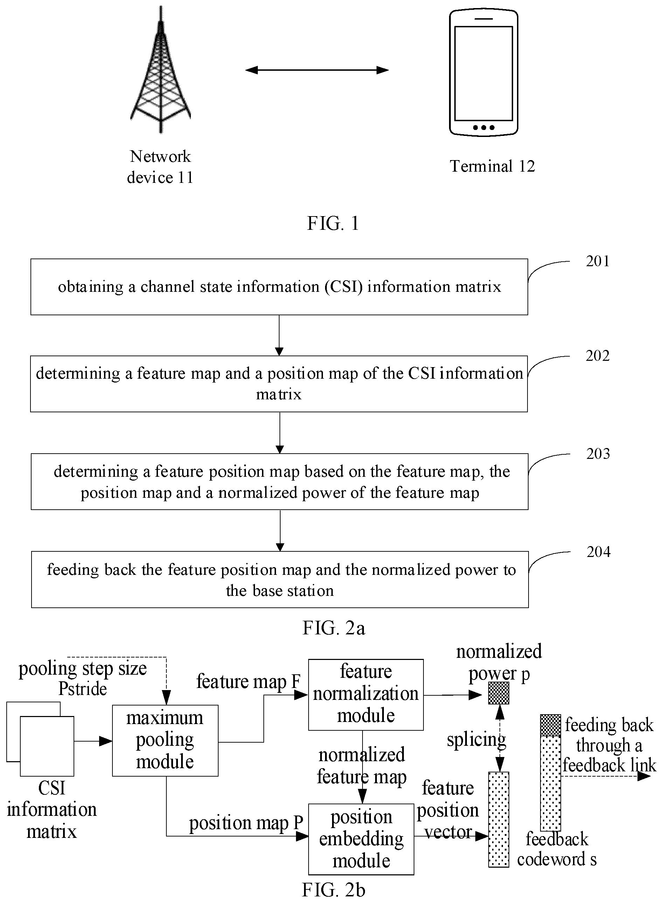

Please refer to FIG. 1, which is a schematic diagram of a communication system according to an embodiment of the present disclosure. The communication system may include, but is not limited to, one base station and one terminal. The number and form of devices shown in FIG. 1 are only shown as an example, and do not constitute a limitation on the embodiments of the present disclosure. The communication system may include two or more base stations and two or more terminals in a practical application. The communication system in FIG. 1 including one base station 11 and one terminal 12 is shown as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

The base station 11 in the embodiments of the present disclosure is an entity on the network side for sending or receiving signals. For example, the base station 11 may be an evolved NodeB (eNB), a transmission reception point (TRP), a next generation NodeB (gNB) in an NR system, a base station in other mobile communication system in the future, or an access point in a wireless networking (Wi-Fi™) system. The embodiments of the present disclosure do not limit the specific technology and the specific device form used by the base station. The base station in the embodiments of the present disclosure may include a central unit (CU) and a distributed unit (DU), in which the CU may also be called a control unit. A protocol layer of the base station, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 12 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The information feedback method and apparatus, the device and the storage medium provided in the embodiments of the present disclosure will now be further described with reference to the accompanying drawings.

Referring to FIG. 2a, FIG. 2a is a flowchart of an information feedback method according to an embodiment of the present disclosure. The method is performed by a terminal. As illustrated in FIG. 2a, the method may include the following steps.

At step 201, a channel state information (CSI) information matrix is obtained.

In one embodiment of the present disclosure, the method for the terminal to obtain the CSI information matrix may mainly include the following steps.

The terminal first determines its actually collected CSI information matrix. The actually collected CSI information matrix may be estimated by the terminal based on pilot information sent by the base station. Then the terminal can use the two-dimensional discrete Fourier transform (DFT) to transform the actually collected CSI information matrix from a spatial-frequency domain to an angular-delay domain to obtain an angular-delay domain CSI information matrix. The angular-delay domain CSI information matrix includes a real part matrix corresponding to CSI information in the angular-delay domain and an imaginary part matrix corresponding to the CSI information in the angular-delay domain. And, it should be noted that due to influence of multipath delay, the angular-delay domain CSI information matrix generally only has values in first $N_c$ rows. Therefore, in the embodiments of the present disclosure, the first $N_c$ rows of the angular-delay domain CSI information matrix may be intercepted to intercept a principal value part so as to obtain the CSI information matrix.

As described above, in one embodiment of the present disclosure, by transforming the CSI information matrix actually collected by the terminal from the spatial-frequency domain to the angular-delay domain and then intercepting the first $N_c$ rows, a matrix dimension corresponding to the obtained CSI information matrix is small, so that when the CSI information matrix is subsequently processed for information feedback, the processing difficulty and feedback overhead can be reduced. This part will be introduced in detail in subsequent embodiments.

Further, it should be noted that in one embodiment of the present disclosure, the dimension of the finally obtained CSI information matrix is essentially related to the number of antennas and the number of subcarriers deployed by the base station. For example, in a frequency division duplex (FDD) mMIMO downlink, $N_t$ antennas are deployed at the base station. The mMIMO uses an orthogonal frequency division multiplexing (OFDM) technology. The number of subcarriers is $N_s$. In this case, a matrix size of the CSI information matrix **H** actually collected by the terminal is $N_s \times N_t$. Two-dimensional DFT is used to transform the actually collected CSI information matrix **H** from the spatial domain to the angular-delay domain to obtain the angular-delay domain CSI information matrix **H$_a$**, where $\mathbf{H_a} = \mathbf{F}_d\mathbf{H}\mathbf{F}_a$, $\mathbf{F}_d$ and $\mathbf{F}_a$ are discrete Fourier transform matrices of sizes $N_B \times N_B$ and $N_t \times N_t$, respectively. Then the first $N_c$ ($N_c$ may be 32) rows of the angular-delay domain CSI information matrix **H$_a$** may be intercepted to intercept the principal value part. The CSI information matrix obtained after intercepting the principal value part is represented by **H$_c$**, and the size is $N_c \times N_t$. The real and imaginary parts of **H$_c$** are separated to obtain $\mathbf{H_c} \in \mathbb{R}^{c \times N_c \times N_t}$, where $c$ represents a dimension of the real and imaginary parts.

It should be noted that, in one embodiment of the present disclosure, the subsequent processing of the angular-delay domain CSI information matrix **H$_c$** specifically includes processing a real part matrix and an imaginary part matrix of the CSI information matrix **H$_c$**, respectively.

At step 202, a feature map and a position map of the CSI information matrix are determined.

In one embodiment of the present disclosure, element values in the feature map correspond to element values in the position map, and the element values in the feature map are obtained by performing maximum pooling processing on element values in the CSI information matrix. An element value in the position map indicates a position of an element value in the feature map corresponding to the element value in the position map in the CSI information matrix.

In one embodiment of the present disclosure, the method of determining the feature map and position map of the CSI information matrix may include: inputting the CSI information matrix into a maximum pooling module, so that the maximum pooling module performs the maximum pooling processing on the CSI information matrix to output the feature map and the position map. The maximum pooling processing may specifically include the following steps.

Step a, maximum pooling is performed on the CSI information matrix based on a pooling step size, and an element value of each pooling and a position of the element value of each pooling in the CSI information matrix are determined.

The pooling step size may be specifically configured by the base station, and the pooling step size may be expressed by the following formula 1:

$$Pstride = \left(1, \ \frac{1}{CR}\right);$$

where *Pstride* represents the pooling step size, CR represents a compression rate, Pstride=(a, b) represents that each pooling interval in a row dimension includes a elements, and each pooling interval in a column dimension includes b elements.

A specific execution method of the above step a includes: determining a pooling window based on the pooling step size, in which a dimension size of the pooling window is $\left(1, \ \frac{1}{CR}\right)$, sequentially box-selecting the element values in the CSI information matrix from the CSI information matrix based on the dimension of the pooling window, determining the biggest element value of all the selected element values in each box-selecting as the element value of each pooling, and determining a position of the biggest element value in the CSI information matrix as the position of the element value of each pooling in the CSI information matrix.

$$\begin{bmatrix} a1 & a2 & a3 \\ b1 & b2 & b3 \\ c1 & c2 & c3 \end{bmatrix}$$

For example, assume that the CSI information matrix $\mathbf{H}_c$ is , where $CR = 1/3$, the dimension of the pooling window is (1, 3). Elements including element a1 in the first row and first column, element a2 in the first row and second column, element a3 in the first row and third column in the CSI information matrix $\mathbf{H}_c$ are box-selected based on the pooling window for the first pooling, the biggest element value (such as a2) of a1, a2 and a3 is determined as the element value of the first pooling, and a position of a2 in the CSI information matrix, i.e., a position of the first row and second column is determined as a position of the element value of the first pooling in the CSI information matrix. Then, elements including element b1 in the second row and first column, element b2 in the second row and second column, element b3 in the second row and third column in the CSI information matrix $\mathbf{H}_c$ are box-selected based on the pooling window for the second pooling, the biggest element value (such as b1) of b1, b2 and b3 is determined as the element value of the second pooling, and a position of b1 in the CSI information matrix, i.e., a position of the second row and first column is determined as a position of the element value of the second pooling in the CSI information matrix. Thereafter, elements including element c1 in the third row and first column, element c2 in the third row and second column, element c3 in the third row and third column in the CSI information matrix $\mathbf{H}_c$ are box-selected based on the pooling window for the third pooling, the biggest element value (such as c3) of cl, c2 and c3 is determined as the element value of the third pooling, and a position of c3 in the CSI information matrix, i.e., a position of the third row and third column is determined as a position of the element value of the third pooling in the CSI information matrix.

Step b, the feature map is determined based on the element value of each pooling.

In one embodiment of the present disclosure, the element value of each pooling may be used to construct a matrix F, and the matrix F is determined as the feature map F.

For example, assuming that the element value of each pooling includes: a2, b1, c3, respectively, then a2, b1, c3

$$\begin{bmatrix} a2 \\ b1 \\ c3 \end{bmatrix}$$

may be used to construct a feature map F such as .

Step c, the position map is determined based on the position of the element value of each pooling in the CSI information matrix.

In one embodiment of the present disclosure, a matrix P may be constructed based on the position of the element value of each pooling in the CSI information matrix, and the matrix P may be determined as the position map P. It should be noted that the elements in the feature map F and the position map P should be in one-to-one correspondence. For example, the element in the i-th row and j-th column of the position map P indicates the position of the element in the i-th row and j-th column of the feature map F in the CSI information matrix.

For example, assuming that the element value of each pooling includes: a2, b1, c3, respectively, a2, b1, c3 can be used to construct a position map P such as

$$\begin{bmatrix} \text{position of } a2 \text{ in CSI information matrix}: & \text{first row and second column} \\ \text{position of } b1 \text{ in CSI information matrix}: & \text{second row and first column} \\ \text{position of } c3 \text{ in CSI information matrix}: & \text{third row and third column} \end{bmatrix}.$$

It should be noted that, after an embodiment of the present disclosure, the element values in the obtained position map should all be positive integers greater than 1.

In an embodiment of the present disclosure, the feature map and the position map may be embodied in a matrix form, or the feature map and the position map may be embodied in a vector form. In the present disclosure, the feature map and the position map are embodied in matrix form as an example for explanation.

In addition, it should be noted that the above-mentioned pooling processing essentially may be understood as compression processing, which may compress the dimensions of the CSI information matrix to obtain a low-dimension feature map and a low-dimension position map. For example, assuming that a matrix dimension of the CSI information matrix is $2 \times N_c \times N_t$, where 2 specifically means that the dimension of the real and imaginary parts corresponding to the CSI information matrix is 2, then the matrix dimension of the feature map and the position map obtained after the pooling processing should be $2 \times N_c \times \frac{N_t}{CR}$. Assuming that $N_c = 32, N_t = 32$, and CR = 1/4, the feature map is $F \in \mathbb{R}^{2 \times 32 \times 8}$, and the position map is $P \in \mathbb{R}^{2 \times 32 \times 8}$.

In one embodiment of the present disclosure, by obtaining the low-dimension feature map and the low-dimension position map, the processing difficulty and feedback overhead may be reduced when the feature map and the position map are subsequently processed for information feedback.

At step 203, a feature position map is determined based on the feature map, the position map and a normalized power of the feature map.

In one embodiment of the present disclosure, the elements in the feature position map indicate the element values in the CSI information matrix and the positions of the element values in the CSI information matrix.

And, in one embodiment of the present disclosure, the above-mentioned determination of the feature position map based on the feature map, the position map, and the normalized power of the feature map may specifically include the following steps.

Step 1, the feature map is inputted into a feature normalization module to output the normalized power and a normalized feature map.

In one embodiment of the present disclosure, element values in the normalized feature map are all distributed in an interval (-1, 1). The normalized feature map is obtained based on the feature map and the normalized power, and the element values in the normalized feature map correspond to the element values in the feature map. The element values in the normalized feature map indicate the element values in the CSI information matrix by indicating the element values in the feature map.

Further, in an embodiment of the present disclosure, the method for the above-mentioned feature normalization module to calculate the normalized power and normalized feature map may include the followings.

The normalized power is calculated by a formula 2 of 
$$p = \sqrt{\sum_{i=1}^{c} \sum_{m=1}^{N_c} \sum_{n=1}^{(CR*N_t)} \mathbf{F}(i, m, n)}.$$

The normalized feature map is calculated by a formula 3 of 
$$\mathbf{F}_{\text{norm}} = \frac{\mathbf{F}}{p}.$$

p represents the normalized power, c represents a dimension of real and imaginary parts corresponding to the feature map, CR represents a compression rate, Nt indicates a number of antennas set by the base station, m represents an m-th row of the feature map, and n represents an n-th column of the feature map, $\mathbf{F}(i, m, n)$ represents an element in the m-th row and n-th column of a real part matrix or an imaginary part matrix corresponding to the feature map. $\mathbf{F}_{\text{norm}}$ represents the normalized feature map, $\mathbf{F}$ represents the feature map, and p represents the normalized power.

With reference to the above formula 3, the element value in the normalized feature map $\mathbf{F}_{\text{norm}}$ is a ratio of an element value in the feature map $\mathbf{F}$ to the normalized power. With reference to the above formula 2, the normalized power is a sum of element values in the feature map, and the normalized power is necessarily greater the element values in the feature map. On basis of that, the ratio of the element value in the feature map $\mathbf{F}$ to the normalized power is a value in the interval (-1, 1), so that it may be determined that the element values in the normalized feature map are all distributed in the interval (-1, 1), i.e., are all decimals.

Step 2, the normalized feature map and the position may are inputted into a position embedding module to output the feature position map.

In one embodiment of the present disclosure, the position embedding module calculates the feature position map based on a formula 4 of 
$$\mathbf{F}_p[i,j] = \begin{cases} \mathbf{F}_{\text{norm}}[i,j] + \mathbf{P}[i,j], & \mathbf{F}_{\text{norm}}[i,j] \in (0, 1] \\ \mathbf{F}_{\text{norm}}[i,j] - \mathbf{P}[i,j], & \mathbf{F}_{\text{norm}}[i,j] \in [-1, 0] \end{cases},$$
where $\mathbf{F}_{\text{norm}}[i,j]$ represents an element value in the i-th row and j-th column of the normalized feature map, $\mathbf{P}[i,j]$ represents an element value in the i-th row and j-th column of the feature map, and $\mathbf{F}_P[i,j]$ represents an element value in the i-th row and j-th column of the feature position map.

With reference to the above formula 4, since the element values in the position map P are all positive integers greater than 1, and the element values in the normalized feature map $\mathbf{F}_{\text{norm}}$ are all distributed in the interval (-1, 1), each element in the feature position map $\mathbf{F}_P$ calculated by formula 4 includes an integer part and a decimal part. The integer part is the element value in the position map $\mathbf{P}$, and the decimal part is the element value in the normalized feature map $\mathbf{F}_{\text{norm}}$. In this way, the decimal part of the element in the feature position map indicates the element value in the CSI information matrix, the integer part of the element in the feature position map indicates the position of the element value in the CSI information matrix indicated by the decimal part of the element in the CSI information matrix.

For example, in one embodiment of the present disclosure, assuming that $\mathbf{F}_{\text{norm}}[1, 1]=-0.5$ and $\mathbf{P}[1, 1]=2$, $\mathbf{F}_P[1, 1]=-2.5$ may be calculated by the above formula 4. Assuming that $\mathbf{F}_{\text{norm}}[1, 1]=0.5$ and $\mathbf{P}[1, 1]=2$, $\mathbf{F}_P[1, 1]=2.5$ may be calculated by the above formula 4.

At step 204, the feature position map and the normalized power are fed back to the base station.

In one embodiment of the present disclosure, the terminal feeds back the feature position map and normalized power to the base station, so that the base station may restore the CSI information matrix based on the feature position map and normalized power, and the base station may determine the channel quality of the downlink based on the CSI information matrix.

In one embodiment of the present disclosure, the terminal may specifically feed back the feature position map and normalized power to the base station through the following steps. The terminal first vectorizes the feature position map into a feature position vector, and then splices the feature position vector and the normalized power to obtain a feedback codeword s, for example, the feedback codeword $s \in \mathbb{R}^{1 \times (512 + 1)}$, in which 512 indicates the number of elements included in the feature position vector, (512+1) may indicate the number of the elements of the spliced feature position vector and normalized power. The feedback codeword s is fed back to the base station through a feedback link.

Further, FIG. 2b is a schematic diagram of an information feedback method according to an embodiment of the present disclosure. As illustrated in FIG. 2b, the obtained CSI information matrix is inputted into the maximum pooling module to determine and output the feature map F and the position map P of the CSI information matrix (i.e., the above step 202). Thereafter, the feature map F is inputted to the feature normalization module to determine and output the normalized power p and a normalized feature map $F_{norm}$. The normalized feature map $F_{norm}$ and the position map P are inputted to the position embedding module to determine the feature position map $F_P$, and the feature position map $F_P$ is transformed into the feature position vector for output. Then the normalized power p and the feature position vector are spliced to obtain the feedback codeword s, and the feedback codeword s is fed back to the base station through the feedback link.

It can be seen from the above that in the embodiments of the present disclosure, since the elements in the feature position map determined by the terminal indicate the element values in the CSI information matrix and the positions of the element values in the CSI information matrix, so the terminal only needs to feed back the feature position map and normalized power to the base station without feeding back position information additionally, and the base station may successfully restore the CSI information matrix based on the feature position map and normalized power, thereby ensuring that the feedback overhead is reduced while the base station can accurately restore the CSI information matrix. In addition, since the feature position map determined in the present disclosure is low-dimensional information after pooling and compression, the feedback overhead can be further reduced.

Meanwhile, in an embodiment of the present disclosure, the terminal needs not to use a neural network when determining the feature position map and normalized power, but only needs to use parameters such as "pooling step size, compression rate", etc., then the base station only needs to configure the pooling step size and the compression rate for the terminal, which may avoid the situation of "training the neural network by the base station and sending parameter information of the trained neural network to the terminal". Due to the data amount of parameter information of the neural network is much larger than the data amount corresponding to the pooling step size and the compression rate, the method of the present disclosure greatly reduces the interactive overhead between the terminal and the base station. Moreover, since there is no need to deploy a neural network on the terminal, lightweight processing of the terminal m be better achieved.

In conclusion, in the information feedback method provided by the embodiments of the present disclosure, the terminal may obtain the CSI information matrix and determine the feature map and the position map of the CSI information matrix, the terminal may determine the feature position map based on the feature map, the position map, and the normalized power of the feature map. The elements in the feature position map indicate the element values in the CSI information matrix and the positions of the element values in the CSI information matrix. Finally, the terminal may feedback the feature position map and the normalized power to the base station. In the method of the present disclosure, since the elements in the feature position map determined by the terminal indicate the element values in the CSI information matrix and the positions of the element values in the CSI information matrix, the terminal merely needs to feedback the feature position map and the normalized power to the base station without feeding back position information additionally, and the base station may successfully restore the CSI information matrix based on the feature position map and the normalized power, thus ensuring that the feedback overhead is reduced on the basis of the base station actually restoring the CSI information matrix. Further, in the method of the present disclosure, the terminal does not require the neural network when determining the feature position map and the normalized power, but only requires parameters such as "a pooling step size and a compression rate", so that the base station only needs to configure the pooling step size and the compression rate for the terminal without configuring or updating the neural network. Since the data amount of parameter information of the neural network is significantly greater than the data amount corresponding to the pooling step size and the compression rate, the method of the present disclosure greatly reduces the interactive overhead of the terminal and the base station. Also, since no neural network needs to be deployed at the terminal, lightweight processing of the terminal may be better achieved.

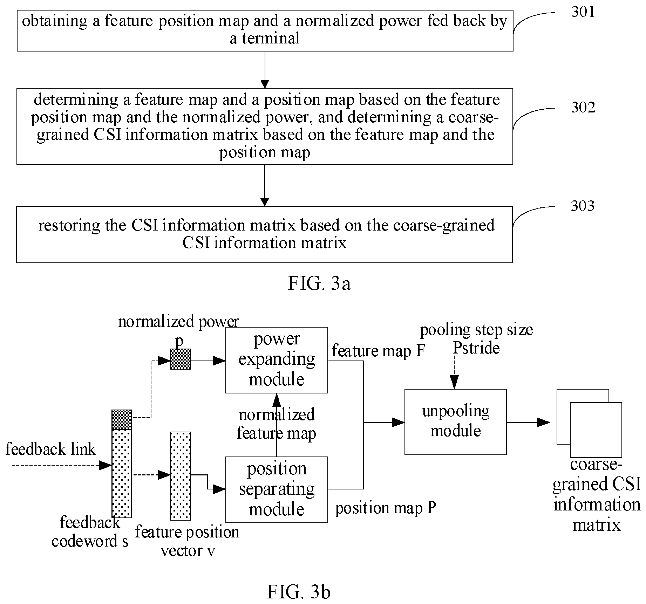

FIG. 3a is a flowchart of an information feedback method according to an embodiment of the present disclosure. The method is performed by a base station. As illustrated in FIG. 3a, the method may include the following steps.

At step 301, a feature position map and a normalized power fed back by a terminal are obtained.

In one embodiment of the present disclosure, elements in the feature position map indicate element values in a CSI information matrix and positions of the element values in the CSI information matrix.

And, in one embodiment of the present disclosure, the method for the base station to obtain the feature position map and the normalized power fed back by the terminal may include: obtaining a feedback codeword fed back by the terminal, in which the feedback codeword is obtained by splicing a feature position vector and the normalized power, and the feature position vector is obtained by vectorizing the feature position map; splitting the feedback codeword to obtain the feature position vector and the normalized power; and processing the feature position vector based on a following formula 5 to obtain the feature position map:

$$\mathbf{V} = \mathrm{mat}(\mathbf{v})$$

where $\mathbf{V}$ represents the feature position map, $\mathbf{v}$ represents the feature position vector, and mat represents a vector matrix operation.

At step 302, a feature map and a position map are determined based on the feature position map and the normalized power, and a coarse-grained CSI information matrix is determined based on the feature map and the position map.

In one embodiment of the present disclosure, the method of determining the feature map and the position map based on the feature position map and the normalized power may include the following steps.

Step 1, the feature position map is inputted into a position separating module to output the position map and a normalized feature map.

In one embodiment of the present disclosure, each element value in the normalized feature map is distributed in an interval (-1,1).

In one embodiment of the present disclosure, the position separating module calculates the position map and the normalized feature map based on a formula 6 of:

$$\mathbf{P}[i,j] = \begin{cases} \mathrm{RoundDown}(\mathbf{V}[i,j]), \mathbf{V}[i,j] > 0 \\ \mathrm{RoundUp}(\mathbf{V}[i,j]), \mathbf{V}[i,j] < 0 \end{cases}$$

and a formula 7 of:

$$\mathbf{F}_{\mathrm{norm}}[i,j] = \begin{cases} \mathbf{V}[i,j] - \mathbf{P}[i,j], \mathbf{V}[i,j] > 0 \\ \mathbf{V}[i,j] + \mathbf{P}[i,j], \mathbf{V}[i,j] < 0 \end{cases}$$

where P $[i, j]$ represents an element value in an i-th row and j-th column of the feature map, $\mathbf{V}[i, j]$ represents an element value in the i-th row and j-th column of the feature position map ($\mathbf{V}[i,j]$ represents the same meaning as the foregoing $\mathbf{F}_{\mathrm{P}}[i, j]$), RoundDown(x) and RoundUp(x) represent downward and upward rounding operations on element x, respectively, $\mathbf{F}_{\mathrm{norm}}[i, j]$ represents an element value in the i-th row and j-th column of the normalized feature map.

For example, in one embodiment of the present disclosure, assuming that $\mathbf{V}[1, 1] = -2.5$, with reference to the above formula 6, it may be determined that $\mathbf{P}[1,1]=2$, and with reference to the above formula 7, it may be determined that $\mathbf{F}_{\mathrm{norm}}[1, 1]=-0.5$. Assuming that $\mathbf{V}[1, 1]=2.5$, with reference to the above formula 6, it may be determined that $\mathbf{P}[1, 1]=2$, and with reference to the above formula 7, it may be determined that $\mathbf{F}_{\mathrm{norm}}[1, 1]=0.5$.

Step 2, the normalized feature map and the normalized power are inputted into a power expanding module to output the feature map.

In one embodiment of the present disclosure, the power expanding module calculates the feature map based on a formula 8 of:

$$\mathbf{F} = \mathbf{F}_{\mathrm{norm}} \times \mathrm{p}$$

where $\mathbf{F}_{\mathrm{norm}}$ represents the normalized feature map, $\mathbf{F}$ represents the feature map, and p represents the normalized power.

With reference to the above formula 8, the element value in the feature map $\mathbf{F}$ restored by the base station is essentially a product of an element in the normalized feature map $\mathbf{F}_{\mathrm{norm}}$ and the normalized power.

It can be seen from the above contents that the above steps 1 to 2 are essentially the reverse process of steps 1 to 2 performed by the terminal, and the base station may restore the feature map and position map based on the feature position map by executing the above step 1 to step 2. It should be noted that, with reference to the above content, it can be seen that in the embodiment of the present disclosure, the element values in the feature map correspond to the element values in the position map, and the element values in the feature map are obtained by performing maximum pooling processing on the element values in the CSI information matrix. An element value in the position map indicates a position of an element value in the feature map corresponding to the element value in the position map in the CSI information matrix.

Further, in an embodiment of the present disclosure, after the base station determines the feature map and the position map, the coarse-grained CSI information matrix may be determined based on the feature map and the position map. The specific step includes: inputting the feature map and the position map into an unpooling module for unpooling processing to output the coarse-grained CSI information matrix.

The unpooling processing mainly includes the following steps.

Step A, a zero matrix is constructed. A size of the zero matrix is the same as a size of the CSI information matrix.

That is, the size of the zero matrix is $N_c \times N_t$. For example, assuming that a matrix size of the CSI information matrix is $3 \times 3$, and the constructed zero matrix may be $\begin{bmatrix} 0 & 0 & 0 \\ 0 & 0 & 0 \\ 0 & 0 & 0 \end{bmatrix}$.

Step A, an empty matrix is filled based on a pooling step size, the element values in the feature map, and the element values in the position map to obtain the coarse-grained CSI information matrix.

The pooling step size may be expressed by a formula 1 of:

$$Pstride = \left(1, \ \frac{1}{CR}\right);$$

where *Pstride* represents the pooling step size, CR represents a compression rate, Pstride=(a, b) represents that each pooling interval in a row dimension comprises a elements, and each pooling interval in a column dimension comprises b elements.

The above-mentioned filling method may include: determining an unpooling window based on the pooling step size, in which a dimension size of the unpooling window is $\left(1, \ \frac{1}{CR}\right)$, sequentially box-selecting element values in the zero matrix from the zero matrix based on the dimension of the unpooling window, and filling corresponding elements values in the feature map into the zero matrix based on the positions indicated by the element values in the position map.

For example, assume that *CR* =1/3, then *Pstride* = (1, 3), the feature map F is $\begin{bmatrix} a2 \\ b1 \\ c3 \end{bmatrix}$, the position map is $\begin{bmatrix} \text{position of } a2 \text{ in CSI information matrix: first row and second column} \\ \text{position of } b1 \text{ in CSI information matrix: second row and first column} \\ \text{position of } c3 \text{ in CSI information matrix: third row and third column} \end{bmatrix}$. The determined dimension of the unpooling window is (1, 3). In this case, elements including an element in the first row and first column, an element in the first row and second column, an element in the first row and third column in the zero matrix are box-selected based on the unpooling window, and the element a2 in the feature map F is filled to the position of the first row and second column in the zero matrix based on the position map indicating that the position of a2 in the CSI information matrix is the position of the first row and second column. Then, elements including an element in the second row and first column, an element in the second row and second column, an element in the second row and third column in the zero matrix are box-selected based on the unpooling window, and the element b1 in the feature map F is filled to the position of the second row and first column in the zero matrix based on the position map indicating that the position of b1 in the CSI information matrix is the position of the second row and first column. Thereafter, elements including an element in the third row and first column, an element in the third row and second column, an element in the third row and third column in the zero matrix are box-selected based on the unpooling window, the element c3 in the feature map F is filled to the position of the third row and third column in the zero matrix based on the position map indicating that the position of c3 in the CSI information matrix is the position of the third row and third column. Thus, the coarse-grained CSI information matrix $\begin{bmatrix} 0 & a2 & 0 \\ b1 & 0 & 0 \\ 0 & 0 & c3 \end{bmatrix}$ is obtained.

Further, FIG. 3b is a schematic diagram of an information feedback method according to an embodiment of the present disclosure. As illustrated in FIG. 3b, the e base station obtains feedback codeword s sent by the terminal through a feedback link, splits the normalized power p and the feature position vector v from the feedback codeword s, inputs the feature position vector v into a position separating module, and inputs the normalized power p into a power expanding module. The position separating module performs a vector matrix operation on the feature position vector v to obtain a feature position map **V.** A normalized feature map $\mathbf{F_{norm}}$ and a position map P are obtained based on the feature position map **V,** the normalized feature map $\mathbf{F_{norm}}$ is inputted into the power expanding module, and the position map P is inputted into the unpooling module. The power expanding module determines the feature map F based on the normalized feature map $\mathbf{F_{norm}}$ and the normalized power p. The feature map F is inputted into the unpooling module. The unpooling module performs unpooling processing based on the position map P and the feature map F to obtain the coarse-grained CSI information matrix.

It can be seen from the above contents that the above step 302 is essentially the reverse process of steps 202 to 203 in the embodiment of FIG. 2, and the coarse-grained CSI information matrix may be restored based on the feature position map by executing the above step 302. However, it should be noted that since the maximum pooling process in the above step 202 compresses the CSI information matrix to a certain extent, and only the elements (such as a2, b1, c3 in the CSI information matrix) obtained by pooling are retained, after the base station performs the unpooling processing, it may only restore the elements obtained by pooling in the CSI information matrix, but cannot restore other elements (for example, it can only restore a2, b1, c3 in the CSI information matrix, and other elements a1, a3, b2, b3, c1, c2 in the CSI information matrix cannot be restored), so that the matrix obtained after the unpooling processing is called the coarse-grained CSI information matrix.

At step 303, the CSI information matrix is restored based on the coarse-grained CSI information matrix.

**In** an embodiment of the present disclosure, the coarse-grained CSI information matrix may be inputted into a multi-feature neural network to output the CSI information matrix. The multi-feature neural network may include:

a one-level multi-feature network or a multi-level cascaded multi-feature network, in which an input end of the one-level multi-feature network or the multi-level cascaded multi-feature network is used to receive the coarse-grained CSI information matrix; and

a recast network, in which an input end of the recast network is connected to an output end of the one-level multi-feature network or the multi-level cascaded multi-feature network, and an output end of the recast network is used to output the CSI information matrix.

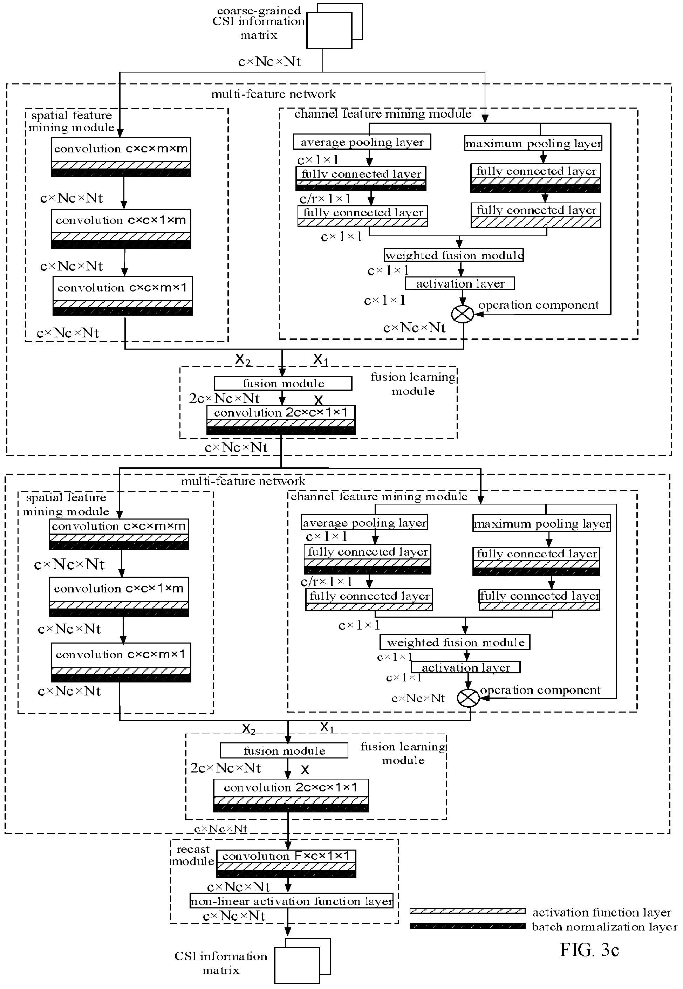

**FIG.** 3c is a schematic diagram of a multi-feature neural network according to an embodiment of the present disclosure. As shown in FIG. 3c, the multi-feature neural network includes a two-level cascaded multi-feature network and a recast network.

With reference to FIG. 3c, the multi-feature network may include a spatial feature mining module and a channel feature mining module in parallel, and a fusion learning module connected to output ends of the spatial feature mining module and the channel feature mining module. Both input ends of the spatial feature mining module and the channel feature mining module are used to receive the coarse-grained CSI information matrix.

In detail, the spatial feature mining module is composed of at least one composite convolution layer connected in series, and the composite convolution layer is a combination layer comprising a convolution layer, a normalization layer and an activation function layer. The spatial feature mining module uses the spatial feature mining module to deeply mine spatial dimension features of the coarse-grained CSI information matrix. In addition, a dimension of the coarse-grained CSI information matrix inputted into the spatial feature mining module may be $2\times32\times8$, and the first layer uses a convolution layer having two convolution kernels each with a convolution kernel size of $c\times m\times m$ (for example, $2\times3\times3$), and the remaining convolutional layers adopt alternating convolutional layers including a convolution layer having two convolution kernels each with a convolution kernel size of $c\times1\times m$ (for example, $2\times1\times9$) and a convolution layer having two convolution kernels each with a convolution kernel size of $c\times m\times1$ (for example, $2\times9\times1$).

The channel feature mining module includes: a first sub-module and a second sub-module connected in parallel, a weighted fusion module connected to an output end of the first sub-module and an output end of the second sub-module, an activation layer connected to the weighted fusion module, an operation component connected to the activation layer and used for a dot product operation, in which the operation component is further connected to input ends of the first sub-module and the second sub-module. The input ends of the first sub-module and the second sub-module are used to receive the coarse-grained CSI information matrix. The first sub-module comprises an average pooling layer and at least one fully connected layer connected in series. The second sub-module comprises a maximum pooling layer and at least one fully connected layer connected in series. The fully connected layer in the first sub-module and the fully connected layer in the second sub-module share parameters. In this way, the performance may be improved while reducing the number of network parameters.

The channel feature mining module uses the channel feature mining module to mine channel dimension features of the coarse-grained CSI information matrix. The channel mining module uses global information to allow the network to selectively enhance features with a large amount of information and suppress useless features, so that useful features may be fully used in the subsequent processing. The dimension of the coarse-grained CSI information matrix inputted into the channel feature mining module may be 2×32×8, the dimension of the first fully connected layer may be 2×1, and the dimension of the last fully connected layer may be 1×2.

Further, in one embodiment of the present disclosure, the weighted fusion module in the channel feature mining module performs weighted fusion through the following formula 9 of:

$$\mathbf{X} = W_1\mathbf{X}_1 + W_2\mathbf{X}_2$$

where $\mathbf{X}$ is an output of the weighted fusion module, $\mathbf{X}_1$ and $\mathbf{X}_2$ are outputs of the first sub-module and the second sub-module, where W1 and W2 are initialized to be 1.0 and 0.5, respectively.

The mined average global information feature and the mined maximum global information feature may be weighted and fused through the above formula 9, and then a channel correlation matrix may be obtained through the activation function layer based on a fused result, and the channel correlation matrix is dot-multiplied by the coarse-grained CSI information matrix, to obtain the CSI matrix processed in the channel dimension. This CSI matrix is different from the coarse-grained CSI matrix. It enhances features with the large amount of information and suppresses useless features, which is beneficial to improving a recasting effect of the subsequent recast module.

Further, the above-mentioned fusion learning module may include: a fusion module and one composite convolution layer connected in series, and the composite convolution layer is a combination layer including a convolution layer, a normalization layer and an activation function layer. In the fusion learning module, the outputs of the spatial feature mining module and the channel feature mining module may be fused for learning and mining. First, the spatial dimension features and channel dimension features are concatenated column by column. The dimension after concatenation and fusion is $2c \times N_c \times N_t$ (for example, 4×32×32). The matrix after concatenation and fusion then passes through a composite convolution layer having two convolution kernels each with a convolution kernel size of $c \times 1 \times 1$. This layer is equivalent to a joint learning layer that learns association between features of different dimensions, strengthens correlation of the features of different dimensions, thereby improving learning performance, and thus improving a representation ability of the network.

The recast network includes: one composite convolution layer and a non-linear activation function layer connected in series, and the composite convolution layer is a combination layer including a convolution layer, a normalization layer and an activation function layer. After processing the coarse-grained CSI information matrix through multiple cascaded (such as two cascaded) multi-feature networks, a simple recast module is designed to further restore a fine-grained CSI matrix (i.e., the CSI information matrix obtained by the terminal in the aforementioned step 201). In particular, the recast module consists of a dimensionality reduction convolutional layer and a non-linear activation function layer. The dimensionality reduction convolution layer is composed of a composite convolution layer. The convolution kernel size is $c \times 1 \times 1$, the number of convolution kernels is 2, and the input dimension is $c \times N_c \times N_t$ (such as 2×32×32), the output dimension is $c \times N_c \times N_t$ (such as 2×32×32). The non-linear activation function layer uses the Sigmoid non-linear activation function to perform non-linear activation on the output of the dimensionality reduction convolution layer to improve learning performance of the network.

In conclusion, in the information feedback method provided by the embodiments of the present disclosure, the terminal may obtain the CSI information matrix and determine the feature map and the position map of the CSI information matrix, the terminal may determine the feature position map based on the feature map, the position map, and the normalized power of the feature map. The elements in the feature position map indicate the element values in the CSI information matrix and the positions of the element values in the CSI information matrix. Finally, the terminal may feedback the feature position map and the normalized power to the base station. In the method of the present disclosure, since the elements in the feature position map determined by the terminal indicate the element values in the CSI information matrix and the positions of the element values in the CSI information matrix, the terminal merely needs to feedback the feature position map and the normalized power to the base station without feeding back position information additionally, and the base station may successfully restore the CSI information matrix based on the feature position map and the normalized power, thus ensuring that the feedback overhead is reduced on the basis of the base station actually restoring the CSI information matrix. Further, in the method of the present disclosure, the terminal does not require the neural network when determining the feature position map and the normalized power, but only requires parameters such as "a pooling step size and a compression rate", so that the base station only needs to configure the pooling step size and the compression rate for the terminal without configuring or updating the neural network. Since the data amount of parameter information of the neural network is significantly greater than the data amount corresponding to the pooling step size and the compression rate, the method of the present disclosure greatly reduces the interactive overhead of the terminal and the base station. Also, since no neural network needs to be deployed at the terminal, lightweight processing of the terminal may be better achieved.

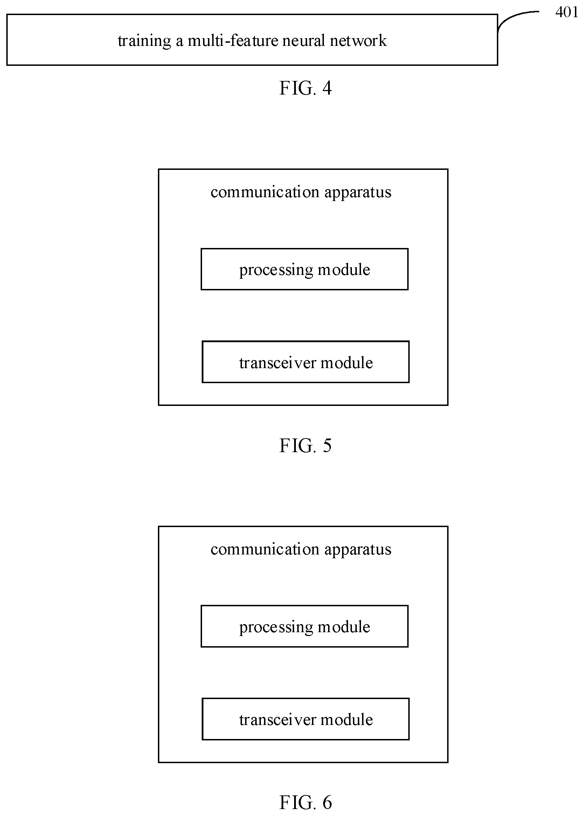

FIG. 4 is a flowchart of an information feedback method according to an embodiment of the present disclosure. As illustrated in FIG. 4, the method may include the following steps.

At step 401, a multi-feature neural network is trained.

In one embodiment of the present disclosure, a data set needs to be selected first. Specifically, in a frequency division duplex (FDD) downlink mMIMO system, assume that $N_t$ =32 antennas are configured at the base station in a uniform linear array (ULA) mode at half-wavelength intervals. A single antenna is configured at the terminal. Using the COST2100[9] channel model, 150,000 spatial domain CSI matrix samples may be generated in the 300MHz outdoor scene, and may be divided into a training set containing 100,000 samples, a verification set containing 30,000 samples, and a test set containing 20,000 samples. The mMIMO system uses the OFDM technology, and the subcarrier $N_s$ =1024, then the spatial-frequency domain CSI information matrix is $H = [\tilde{h}_1...\tilde{h}_{N_s}]^H$. The two-dimensional DFT is used to transform the spatial domain CSI matrix H from the spatial domain to the angular-delay domain, that is $H_a = F_d H F_a^H$. $F_d$ and $F_a^H$ are discrete Fourier transform matrices with sizes of 1024×1024 and 32×32, respectively. The superscript H represents the conjugate transpose of the matrix. In the angular-delay domain, a multipath arrival delay in a limited time period is used to intercept a principal value part of the first $N_c$ =32 rows of $H_a$. In this case, a size of the angular-delay domain CSI information matrix $H_c$ is 2×32×32. 150,000 angular-delay domain CSI information matrix (i.e., the information matrix obtained by the terminal in the above step 201) samples are generated, which may be divided into a training set containing 100,000 samples, a verification set containing 30,000 samples, and a test set containing 20,000 samples. Based on the training set, the verification set, and the test set, training of the multi-feature neural network is completed.

It should be noted that, in one embodiment of the present disclosure, the training phase may be performed on the base station side or the terminal side, using an end-to-end supervised learning training mode, with the purpose of training parameters of a multi-feature fusion neural network on the base station side, to ensure that an error between a channel matrix reconstructed by the multi-feature fusion neural network and the original matrix is minimal. After the network training is completed, the network parameters of the multi-feature fusion neural network are saved.

In particular, there are two training modes.

(1) Training on the base station side. The entire CSI compression feedback and network training phase is executed on the base station side. After the training is completed, the base station directly deploys the corresponding network parameters of the multi-feature fusion neural network, and meanwhile transmits the determined matching parameters such as the compression rate and the pooling step size to the terminal. In this case, a signaling exchanged between the base station and the terminal is a lightweight matching parameter, such as the pooling step size.

**(2)** Training on the terminal side. The entire CSI compression feedback and network training phase is executed on the terminal side. After the training is completed, the terminal saves the current compression rate, the pooling step size and other matching parameters, and meanwhile transmits network parameters corresponding to the base station network, that is, the trained multi-feature network to the base station. In this case, a signaling exchanged between the terminal and the base station is neural network parameters of the base station with large overhead.

Based on the above contents, it can be seen that the method provided by the present disclosure can achieve the following aspects.

(1) The present disclosure proposes a lightweight interactive CSI deep compression feedback method, and designs a CSI compression feedback matching algorithm and a CSI deep recast network that do not require joint training. The core includes a feature extraction algorithm based on position embedding (i.e. the algorithm used in the structure of FIG. 2b), a feature matching algorithm based on position separation (that is, the algorithm used in the structure of FIG. 3b), and a multi-feature fusion based neural network (that is, the algorithm used in the structure of FIG. 3c). This method has excellent performance in both CSI compression and recast accuracy.

(2) The lightweight interactive feedback method proposed by the present disclosure realizes a lightweight terminal network and a lightweight network interaction. In particular, the proposed method uses the feature extraction algorithm based on position embedding to fully consider key elements in the CSI matrix through a maximum pooling strategy, and adopts the idea of position embedding to greatly reduce transmission overhead of the feedback codeword. Further, the terminal only needs to apply the proposed feature extraction algorithm without the need to deploy a neural network, which can better achieve lightweight processing on the UE side.

(3) In response to changes in the physical environment, the network proposed by the present disclosure only needs to update the neural network on the base station side and send a small number of matching parameters to the terminal, which greatly improves an online deployment capability and has high flexibility. When the network is trained offline, it only needs to be performed at the base station. During online deployment, the multi-feature fusion network only needs to be deployed directly on the base station. The terminal does not need to update any network parameters. There is no need to retrain and re-update deployed network parameters like the DL network in the related art, which greatly reduces huge overhead brought by the update of the network model, thus improving the online deployment capability.

FIG. 5 is a block diagram of a communication apparatus according to an embodiment of the present disclosure. As illustrated in FIG. 5, the communication apparatus may include a processing module and a transceiver module.

The processing module is configured to obtain a channel state information (CSI) information matrix.

The processing module is further configured to determine a feature map and a position map of the CSI information matrix.

The processing module is further configured to determine a feature position map based on the feature map, the position map, and a normalized power of the feature map, in which elements in the feature position map indicate element values in the CSI information matrix and positions of the element values in the CSI information matrix.

The transceiver module is configured to feed back the feature position map and the normalized power to a base station.

In conclusion, in the communication apparatus provided by the embodiments of the present disclosure, the terminal may obtain the CSI information matrix and determine the feature map and the position map of the CSI information matrix, the terminal may determine the feature position map based on the feature map, the position map, and the normalized power of the feature map. The elements in the feature position map indicate the element values in the CSI information matrix and the positions of the element values in the CSI information matrix. Finally, the terminal may feedback the feature position map and the normalized power to the base station. In the method of the present disclosure, since the elements in the feature position map determined by the terminal indicate the element values in the CSI information matrix and the positions of the element values in the CSI information matrix, the terminal merely needs to feedback the feature position map and the normalized power to the base station without feeding back position information additionally, and the base station may successfully restore the CSI information matrix based on the feature position map and the normalized power, thus ensuring that the feedback overhead is reduced on the basis of the base station actually restoring the CSI information matrix. Further, in the method of the present disclosure, the terminal does not require the neural network when determining the feature position map and the normalized power, but only requires parameters such as "a pooling step size and a compression rate", so that the base station only needs to configure the pooling step size and the compression rate for the terminal without configuring or updating the neural network. Since the data amount of parameter information of the neural network is significantly greater than the data amount corresponding to the pooling step size and the compression rate, the method of the present disclosure greatly reduces the interactive overhead of the terminal and the base station. Also, since no neural network needs to be deployed at the terminal, lightweight processing of the terminal may be better achieved.

Optionally, in one embodiment of the present disclosure, the processing module is configured to:

determine a CSI information matrix actually collected by the terminal, and transforming the actually collected CSI information matrix from a spatial frequency domain into an angular-delay domain to obtain an angular-delay domain CSI information matrix, wherein the angular-delay domain CSI information matrix comprises a real part matrix corresponding to CSI information in the angular-delay domain and an imaginary part matrix corresponding to the CSI information in the angular-delay domain;

intercept first $N_c$ rows of the angular-delay domain CSI information matrix to obtain the CSI information matrix.

Optionally, in one embodiment of the present disclosure, the processing module is configured to:

input the CSI information matrix into a maximum pooling module, so that the maximum pooling module performs maximum pooling processing on the CSI information matrix to output the feature map and the position map; wherein element values in the feature map correspond to element values in the position map, the element values in the feature map are obtained by performing the maximum pooling processing on the element values in the CSI information matrix, and an element value in the position map indicates a position of an element value in the feature map corresponding to the element value in the position map in the CSI information matrix.

Optionally, in one embodiment of the present disclosure, the maximum pooling processing comprises:

performing maximum pooling on the CSI information matrix based on a pooling step size;

determining an element value of each pooling and a position of the element value of each pooling in the CSI information matrix;

determining the feature map based on the element value of each pooling; and

determining the position map based on the position of the element value of each pooling in the CSI information matrix.

Optionally, in one embodiment of the present disclosure, the apparatus is configured to:

obtain the pooling step size configured by the base station, wherein the pooling step size is expressed by a formula of:

$$Pstride = \left(1, \ \frac{1}{CR}\right);$$

where *Pstride* represents the pooling step size, CR represents a compression rate, Pstride=(a, b) represents that each pooling interval in a row dimension comprises a elements, and each pooling interval in a column dimension comprises b elements.

Optionally, in one embodiment of the present disclosure, each element value in the position map is a positive integer greater than 1;
the processing module is configured to:

input the feature map into a feature normalization module to output the normalized power and a normalized feature map, wherein each element value in the normalized feature map is distributed in an interval (-1, 1) , the normalized feature map is obtained by performing calculation based on the feature map and the normalized power, element values in the normalized feature map correspond to element values in the feature map, and the element values in the normalized feature map indicate the element values in the CSI information matrix by indicating the element values in the feature map;
input the normalized feature map and the position map into a position embedding module to output the feature position map.

Optionally, in one embodiment of the present disclosure, the normalization module calculates the normalized power based on a formula of:

$$p = \sqrt{\sum_{i=1}^{c} \sum_{m=1}^{N_c} \sum_{n=1}^{(CR*N_t)} \mathbf{F}(i, m, n)}$$

where p represents the normalized power, c represents a dimension of real and imaginary parts corresponding to the feature map, CR represents a compression rate, $N_t$ indicates a number of antennas set by the base station, m represents an m-th row of the feature map, and n represents an n-th column of the feature map, $\mathbf{F}(i, m, n)$ represents an element in the m-th row and n-th column of a real part matrix or an imaginary part matrix corresponding to the feature map.

Optionally, in one embodiment of the present disclosure, the normalization module calculates the normalized feature map based on a formula of:

$$\mathbf{F}_{norm} = \frac{\mathbf{F}}{p}$$

where $\mathbf{F}_{norm}$ represents the normalized feature map, $\mathbf{F}$ represents the feature map, and p represents the normalized power.

Optionally, in one embodiment of the present disclosure, the position embedding module calculates the feature position map based on a formula of:

$$\mathbf{F}_p[i, j] = \begin{cases} \mathbf{F}_{norm}[i, j] + \mathbf{P}[i, j], & \mathbf{F}_{norm}[i, j] \in (0, 1] \\ \mathbf{F}_{norm}[i, j] - \mathbf{P}[i, j], & \mathbf{F}_{norm}[i, j] \in [-1, 0] \end{cases}$$

where $\mathbf{F}_{norm}[i, j]$ represents an element value in an i-th row and j-th column of the normalized feature map, $\mathbf{P}[i, j]$ represents an element value in the i-th row and j-th column of the feature map, and $\mathbf{F}_p[i, j]$ represents an element value in the i-th row and j-th column of the feature position map;
each element in the feature position map comprises an integer part and a decimal part, wherein the decimal part of the element in the feature position map indicates an element value in the CSI information matrix, and the integer part of the element in the feature position map indicates a position of the element value in the CSI information matrix indicated by the decimal part of the element in the CSI information matrix.

Optionally, in one embodiment of the present disclosure, the transceiver module is configured to:

vectorize the feature position map into a feature position vector;
splice the feature position vector and the normalized power to obtain a feedback codeword; and
feed back the feedback codeword to the base station.

Optionally, in one embodiment of the present disclosure, the apparatus is configured to:
obtain the compression rate CR configured by the base station.

FIG. 6 is a block diagram of a communication apparatus according to an embodiment of the present disclosure. As illustrated in FIG. 6, the communication apparatus may include a processing module and a transceiver module.

The transceiver module is configured to obtain a feature position map and a normalized power fed back by a terminal, wherein elements in the feature position map indicate element values in a channel state information (CSI) information matrix and positions of the element values in the CSI information matrix.

The processing module is configured to determine a feature map and a position map based on the feature position map and the normalized power, and determine a coarse-grained CSI information matrix based on the feature map and the position map.

The processing module is further configured to restore the CSI information matrix based on the coarse-grained CSI information matrix.

In conclusion, in the communication apparatus provided by the embodiments of the present disclosure, the terminal may obtain the CSI information matrix and determine the feature map and the position map of the CSI information matrix, the terminal may determine the feature position map based on the feature map, the position map, and the normalized power of the feature map. The elements in the feature position map indicate the element values in the CSI information matrix and the positions of the element values in the CSI information matrix. Finally, the terminal may feedback the feature position map and the normalized power to the base station. In the method of the present disclosure, since the elements in the feature position map determined by the terminal indicate the element values in the CSI information matrix and the positions of the element values in the CSI information matrix, the terminal merely needs to feedback the feature position map and the normalized power to the base station without feeding back position information additionally, and the base station may successfully restore the CSI information matrix based on the feature position map and the normalized power, thus ensuring that the feedback overhead is reduced on the basis of the base station actually restoring the CSI information matrix. Further, in the method of the present disclosure, the terminal does not require the neural network when determining the feature position map and the normalized power, but only requires parameters such as "a pooling step size and a compression rate", so that the base station only needs to configure the pooling step size and the compression rate for the terminal without configuring or updating the neural network. Since the data amount of parameter information of the neural network is significantly greater than the data amount corresponding to the pooling step size and the compression rate, the method of the present disclosure greatly reduces the interactive overhead of the terminal and the base station. Also, since no neural network needs to be deployed at the terminal, lightweight processing of the terminal may be better achieved.

Optionally, in one embodiment of the present disclosure, the transceiver module is configured to:

obtain a feedback codeword fed back by the terminal, wherein the feedback codeword is obtained by splicing a feature position vector and the normalized power, and the feature position vector is obtained by vectorizing the feature position map;
split the feedback codeword to obtain the feature position vector and the normalized power;
**process** the feature position vector based on a following formula to obtain the feature position map:

$$\mathbf{V} = \mathrm{mat}(\mathbf{v})$$

where **V** represents the feature position map, **v** represents the feature position vector, and mat represents a vector matrix operation.

Optionally, in one embodiment of the present disclosure, the processing module is configured to:

input the feature position map into a position separating module to output the position map and a normalized feature map, wherein each element value in the normalized feature map is distributed in an interval (-1,1); and
input the normalized feature map and the normalized power into a power expanding module to output the feature map.

Optionally, in one embodiment of the present disclosure, the position separating module calculates the position map and the normalized feature map based on formulas of:

$$\mathbf{P}[i,j] = \begin{cases} \mathrm{RoundDown}(\mathbf{V}[i,j]), \mathbf{V}[i,j] > 0 \\ \mathrm{RoundUp}(\mathbf{V}[i,j]), \mathbf{V}[i,j] < 0 \end{cases}$$

$$\mathbf{F}_{\mathrm{norm}}[i,j] = \begin{cases} \mathbf{V}[i,j] - \mathbf{P}[i,j], \mathbf{V}[i,j] > 0 \\ \mathbf{V}[i,j] + \mathbf{P}[i,j], \mathbf{V}[i,j] < 0 \end{cases}$$

where $\mathbf{P}[i, j]$ represents an element value in an i-th row and j-th column of the feature map, $\mathbf{V}[i, j]$ represents an element value in the i-th row and j-th column of the feature position map, RoundDown(x) and RoundUp(x) represent downward and upward rounding operations on element x, respectively, $\mathbf{F}_{\mathrm{norm}}[i, j]$ represents an element value in the i-th row and j-th column of the normalized feature map.

Optionally, in one embodiment of the present disclosure, the position separating module calculates the feature map based on a formula of:

$$\mathbf{F} = \mathbf{F}_{\mathrm{norm}} \times \mathrm{p}$$

where $\mathbf{F}_{\mathrm{norm}}$ represents the normalized feature map, $\mathbf{F}$ represents the feature map, and p represents the normalized power.

Optionally, in one embodiment of the present disclosure, element values in the feature map correspond to element values in the position map, the element values in the feature map are obtained by performing maximum pooling processing on the element values in the CSI information matrix, and an element value in the position map indicates a position of an element value in the feature map corresponding to the element value in the position map in the CSI information matrix;

the transceiver module is configured to:

input the feature map and the position map into an unpooling module for unpooling processing, to output the coarse-grained CSI information matrix.

Optionally, in one embodiment of the present disclosure, the unpooling processing comprises:

constructing a zero matrix, wherein a size of the zero matrix is the same as a size of the CSI information matrix; and filling an empty matrix based on a pooling step size, the element values in the feature map, and the element values in the position map to obtain the coarse-grained CSI information matrix.

Optionally, in one embodiment of the present disclosure, the pooling step size is expressed by a formula of:

$$Pstride = \left( 1, \ \frac{1}{CR} \right);$$

where *Pstride* represents the pooling step size, CR represents a compression rate, Pstride=(a, b) represents that each pooling interval in a row dimension comprises a elements, and each pooling interval in a column dimension comprises b elements.

Optionally, in one embodiment of the present disclosure, the apparatus is configured to:

configure the pooling step size and the compression rate for the terminal.

Optionally, in one embodiment of the present disclosure, the processing module is configured to:

input the coarse-grained CSI information matrix into a multi-feature neural network to output the CSI information matrix.

Optionally, in one embodiment of the present disclosure, the multi-feature neural network comprises:

a one-level multi-feature network or a multi-level cascaded multi-feature network, wherein an input end of the one-level multi-feature network or the multi-level cascaded multi-feature network is used to receive the coarse-grained CSI information matrix; and

a recast network, wherein an input end of the recast network is connected to an output end of the one-level multi-feature network or the multi-level cascaded multi-feature network, and an output end of the recast network is used to output the CSI information matrix.

Optionally, in one embodiment of the present disclosure, the multi-feature network comprises: a spatial feature mining module and a channel feature mining module in parallel, and a fusion learning module connected to output ends of the spatial feature mining module and the channel feature mining module;
both input ends of the spatial feature mining module and the channel feature mining module are used to receive the coarse-grained CSI information matrix.

Optionally, in one embodiment of the present disclosure, the spatial feature mining module is composed of at least one composite convolution layer connected in series, and the composite convolution layer is a combination layer comprising a convolution layer, a normalization layer and an activation function layer.

Optionally, in one embodiment of the present disclosure, the channel feature mining module comprises: a first sub-module and a second sub-module connected in parallel, a weighted fusion module connected to an output end of the first sub-module and an output end of the second sub-module, an activation layer connected to the weighted fusion module, an operation component connected to the activation layer and used for a dot product operation, wherein the operation component is further connected to input ends of the first sub-module and the second sub-module;

the input ends of the first sub-module and the second sub-module are used to receive the coarse-grained CSI information matrix;
the first sub-module comprises an average pooling layer and at least one fully connected layer connected in series;
the second sub-module comprises a maximum pooling layer and at least one fully connected layer connected in series;
the fully connected layer in the first sub-module and the fully connected layer in the second sub-module share parameters.

Optionally, in one embodiment of the present disclosure, the fusion learning module comprises: a fusion module and one composite convolution layer connected in series, and the composite convolution layer is a combination layer comprising a convolution layer, a normalization layer and an activation function layer.

Optionally, in one embodiment of the present disclosure, the recast network comprises: one composite convolution layer and a non-linear activation function layer connected in series, and the composite convolution layer is a combination layer comprising a convolution layer, a normalization layer and an activation function layer.

Optionally, in one embodiment of the present disclosure, the apparatus is configured to:
train the multi-feature neural network.

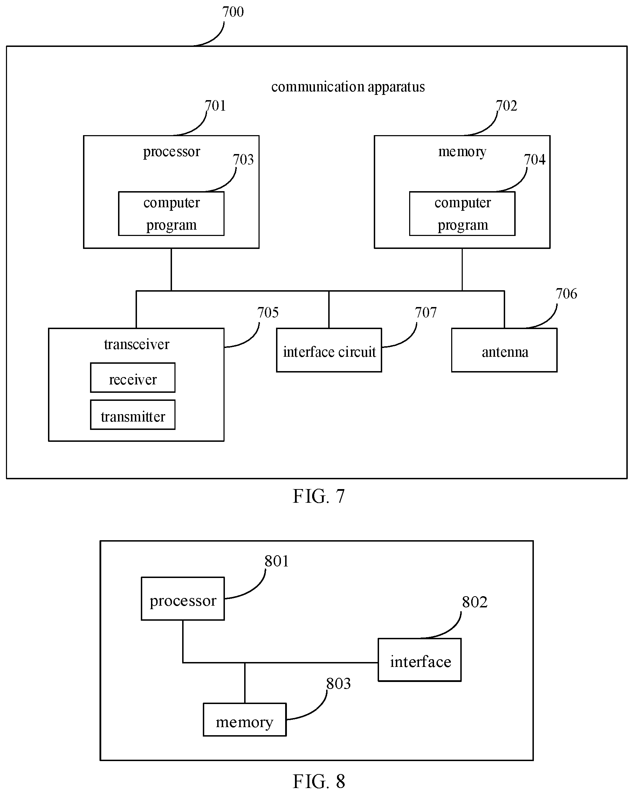

FIG. 7 is another block diagram of a communication apparatus 700 according to an embodiment of the present disclosure. The communication apparatus 700 may be a terminal, a base station, a chip, a chip system, a processor, etc. that supports the terminal to implement the method, or a chip, a chip system, a processor, etc. that supports the base station to implement the method. The apparatus may be used to implement the method in the above method embodiments. For details, please refer to the above method embodiments.

The communication apparatus 700 may include one or more processors 701. The processor 701 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 700 may also include one or more memories 702 for storing the computer program 704. The processor 701 executes the computer program 704, to cause the communication apparatus 700 to implement the method in the above method embodiments. Optionally, the memory 702 may also store data. The communication apparatus 1400 and the memory 1402 may be set up separately or integrated together.

Optionally, the communication apparatus 700 may also include a transceiver 705 and an antenna 706. The transceiver 705 may be called a transceiver unit, a transceiver machine, or a transceiver circuit, etc., to implement the receiving and sending function. The transceiver 705 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 700 may also include one or more interface circuits 707. The interface circuit 707 is used to receive code instructions and transmit the code instructions to the processor 701. The processor 701 runs the code instructions to cause the communication apparatus 700 to implement the method in the above method embodiment.

In one implementation, the processor 701 may include a transceiver for implementing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In one implementation, the processor 701 may store a computer program 703. When the computer program 703 is running on the processor 701, the communication apparatus 700 is caused to implement the method in the above method embodiments. The computer program 703 may be solidified in the processor 701, in which case the processor 701 may be implemented in hardware.

**In** an implementation, the communication apparatus 700 includes a circuit that may implement the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus in the above embodiments may be a base station or a terminal, but the scope of the communication apparatus in the disclosure is not limited to this, and the structure of the communication apparatus may not be restricted by FIG. 7. The communication apparatus may be an independent device or part of a larger device. For example, the communication apparatus may be:

(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication apparatus may be a chip or a chip system, please refer to the structural diagram of a chip in FIG. 8. The chip shown in FIG. 8 includes a processor 801 and an interface 802. There may be one or more processors 801, and there may be one or more interfaces 802.

Optionally, the chip also includes a memory 803, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a readable storage medium for storing instructions is provided. When the instructions are executed by a computer, the function of any one of the above method embodiments is performed.

In the embodiments of the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. An information feedback method, performed by a terminal, comprising:

   obtaining a channel state information (CSI) information matrix;
   determining a feature map and a position map of the CSI information matrix;
   determining a feature position map based on the feature map, the position map, and a normalized power of the feature map, wherein elements in the feature position map indicate element values in the CSI information matrix and positions of the element values in the CSI information matrix; and
   feeding back the feature position map and the normalized power to a base station.

2. The method of claim 1, wherein obtaining the CSI information matrix comprises:

   determining a CSI information matrix actually collected by the terminal, and transforming the actually collected CSI information matrix from a spatial frequency domain into an angular-delay domain to obtain an angular-delay domain CSI information matrix, wherein the angular-delay domain CSI information matrix comprises a real part matrix corresponding to CSI information in the angular-delay domain and an imaginary part matrix corresponding to the CSI information in the angular-delay domain;
   intercepting first $N_c$ rows of the angular-delay domain CSI information matrix to obtain the CSI information matrix.

3. The method of claim 1 or 2, wherein determining the feature map and the position map of the CSI information matrix comprises:
   inputting the CSI information matrix into a maximum pooling module, so that the maximum pooling module performs maximum pooling processing on the CSI information matrix to output the feature map and the position map; wherein element values in the feature map correspond to element values in the position map, the element values in the feature map are obtained by performing the maximum pooling processing on the element values in the CSI information matrix, and an element value in the position map indicates a position of an element value in the feature map corresponding to the element value in the position map in the CSI information matrix.

4. The method of claim 3, wherein the maximum pooling processing comprises:

performing maximum pooling on the CSI information matrix based on a pooling step size;
determining an element value of each pooling and a position of the element value of each pooling in the CSI information matrix;
determining the feature map based on the element value of each pooling; and
determining the position map based on the position of the element value of each pooling in the CSI information matrix.

5. The method of claim 4, further comprising:

obtaining the pooling step size configured by the base station, wherein the pooling step size is expressed by a formula of:

$$Pstride = \left(1, \ \frac{1}{CR}\right);$$

where *Pstride* represents the pooling step size, CR represents a compression rate, Pstride=(a, b) represents that each pooling interval in a row dimension comprises a elements, and each pooling interval in a column dimension comprises b elements.

6. The method of claim 1 or 2, wherein, each element value in the position map is a positive integer greater than 1; determining the feature position map based on the feature map, the position map, and the normalized power of the feature map comprises:

inputting the feature map into a feature normalization module to output the normalized power and a normalized feature map, wherein each element value in the normalized feature map is distributed in an interval (-1, 1), the normalized feature map is obtained by performing calculation based on the feature map and the normalized power, element values in the normalized feature map correspond to element values in the feature map, and the element values in the normalized feature map indicate the element values in the CSI information matrix by indicating the element values in the feature map;
inputting the normalized feature map and the position map into a position embedding module to output the feature position map.

7. The method of claim 6, wherein the normalization module calculates the normalized power based on a formula of:

$$p = \sqrt{\sum_{i=1}^{c} \sum_{m=1}^{N_c} \sum_{n=1}^{(CR*N_t)} \mathbf{F}(i, m, n)}$$

where p represents the normalized power, c represents a dimension of real and imaginary parts corresponding to the feature map, CR represents a compression rate, $N_t$ indicates a number of antennas set by the base station, m represents an m-th row of the feature map, and n represents an n-th column of the feature map, $\mathbf{F}(i, m, n)$ represents an element in the m-th row and n-th column of a real part matrix or an imaginary part matrix corresponding to the feature map.

8. The method of claim 7, wherein the normalization module calculates the normalized feature map based on a formula of:

$$\mathbf{F}_{norm} = \frac{\mathbf{F}}{p}$$

where $F_{norm}$ represents the normalized feature map, F represents the feature map, and p represents the normalized power.

9. The method of claim 6, wherein the position embedding module calculates the feature position map based on a formula of:

$$\mathbf{F}_{p}[i,j] = \begin{cases} \mathbf{F}_{norm}[i,j] + \mathbf{P}[i,j], & \mathbf{F}_{norm}[i,j] \in (0,1] \\ \mathbf{F}_{norm}[i,j] - \mathbf{P}[i,j], & \mathbf{F}_{norm}[i,j] \in [-1,0] \end{cases}$$

where $\mathbf{F}_{norm}[i, j]$ represents an element value in an i-th row and j-th column of the normalized feature map, $\mathbf{P}[i, j]$ represents an element value in the i-th row and j-th column of the feature map, and $\mathbf{F}_{p}[i, j]$ represents an element value in the i-th row and j-th column of the feature position map;
each element in the feature position map comprises an integer part and a decimal part, wherein the decimal part of the element in the feature position map indicates an element value in the CSI information matrix, and the integer part of the element in the feature position map indicates a position of the element value in the CSI information matrix indicated by the decimal part of the element in the CSI information matrix.

10. The method of claim 1, wherein feeding back the feature position map and the normalized power to the base station comprises:

vectorizing the feature position map into a feature position vector;
splicing the feature position vector and the normalized power to obtain a feedback codeword; and
feeding back the feedback codeword to the base station.

11. The method of claim 5 or 7, further comprising:
obtaining the compression rate CR configured by the base station.

12. An information feedback method, performed by a base station, comprising:

obtaining a feature position map and a normalized power fed back by a terminal, wherein elements in the feature position map indicate element values in a channel state information (CSI) information matrix and positions of the element values in the CSI information matrix;
determining a feature map and a position map based on the feature position map and the normalized power, and determining a coarse-grained CSI information matrix based on the feature map and the position map; and
restoring the CSI information matrix based on the coarse-grained CSI information matrix.

13. The method of claim 12, wherein obtaining the feature position map and the normalized power fed back by the terminal comprises:

obtaining a feedback codeword fed back by the terminal, wherein the feedback codeword is obtained by splicing a feature position vector and the normalized power, and the feature position vector is obtained by vectorizing the feature position map;
splitting the feedback codeword to obtain the feature position vector and the normalized power;
processing the feature position vector based on a following formula to obtain the feature position map:

$$\mathbf{V} = \text{mat}(\mathbf{v})$$

where $\mathbf{V}$ represents the feature position map, $\mathbf{v}$ represents the feature position vector, and mat represents a vector matrix operation.

14. The method of claim 12, wherein determining the feature map and the position map based on the feature position map and the normalized power comprises:

inputting the feature position map into a position separating module to output the position map and a normalized feature map, wherein each element value in the normalized feature map is distributed in an interval (-1,1); and inputting the normalized feature map and the normalized power into a power expanding module to output the feature map.

15. The method of claim 14, wherein the position separating module calculates the position map and the normalized feature map based on formulas of:

$$\mathbf{P}[i,j] = \begin{cases} \mathrm{RoundDown}(\mathbf{V}[i,j]), \mathbf{V}[i,j] > 0 \\ \mathrm{RoundUp}(\mathbf{V}[i,j]), \mathbf{V}[i,j] < 0 \end{cases}$$

$$\mathbf{F}_{\mathrm{norm}}[i,j] = \begin{cases} \mathbf{V}[i,j] - \mathbf{P}[i,j], \mathbf{V}[i,j] > 0 \\ \mathbf{V}[i,j] + \mathbf{P}[i,j], \mathbf{V}[i,j] < 0 \end{cases}$$

where $\mathbf{P}[i,j]$ represents an element value in an i-th row and j-th column of the feature map, $\mathbf{V}[i,j]$ represents an element value in the i-th row and j-th column of the feature position map, RoundDown(x) and RoundUp(x) represent downward and upward rounding operations on element x, respectively, $\mathbf{F}_{\mathrm{norm}}[i,j]$ represents an element value in the i-th row and j-th column of the normalized feature map.

16. The method of claim 14, wherein the position separating module calculates the feature map based on a formula of:

$$\mathbf{F} = \mathbf{F}_{\mathrm{norm}} \times \mathrm{p}$$

where $\mathbf{F}_{\mathrm{norm}}$ represents the normalized feature map, $\mathbf{F}$ represents the feature map, and p represents the normalized power.

17. The method of claim 12, wherein element values in the feature map correspond to element values in the position map, the element values in the feature map are obtained by performing maximum pooling processing on the element values in the CSI information matrix, and an element value in the position map indicates a position of an element value in the feature map corresponding to the element value in the position map in the CSI information matrix;
determining the coarse-grained CSI information matrix based on the feature map and the position map comprises:
inputting the feature map and the position map into an unpooling module for unpooling processing, to output the coarse-grained CSI information matrix.

18. The method of claim 17, wherein the unpooling processing comprises:

constructing a zero matrix, wherein a size of the zero matrix is the same as a size of the CSI information matrix; and filling an empty matrix based on a pooling step size, the element values in the feature map, and the element values in the position map to obtain the coarse-grained CSI information matrix.

19. The method of claim 18, wherein the pooling step size is expressed by a formula of:

$$Pstride = \left(1, \ \frac{1}{CR}\right);$$

where *Pstride* represents the pooling step size, CR represents a compression rate, Pstride=(a, b) represents that each pooling interval in a row dimension comprises a elements, and each pooling interval in a column dimension comprises b elements.

20. The method of claim 18, further comprising:
configuring the pooling step size and a compression rate for the terminal.

21. The method of claim 12, wherein restoring the CSI information matrix based on the coarse-grained CSI information matrix comprises:
inputting the coarse-grained CSI information matrix into a multi-feature neural network to output the CSI information matrix.

22. The method of claim 21, wherein the multi-feature neural network comprises:

   a one-level multi-feature network or a multi-level cascaded multi-feature network, wherein an input end of the one-level multi-feature network or the multi-level cascaded multi-feature network is used to receive the coarse-grained CSI information matrix; and
   a recast network, wherein an input end of the recast network is connected to an output end of the one-level multi-feature network or the multi-level cascaded multi-feature network, and an output end of the recast network is used to output the CSI information matrix.

23. The method of claim 22, wherein the multi-feature network comprises: a spatial feature mining module and a channel feature mining module in parallel, and a fusion learning module connected to output ends of the spatial feature mining module and the channel feature mining module;
   wherein, both input ends of the spatial feature mining module and the channel feature mining module are used to receive the coarse-grained CSI information matrix.

24. The method of claim 23, wherein the spatial feature mining module is composed of at least one composite convolution layer connected in series, and the composite convolution layer is a combination layer comprising a convolution layer, a normalization layer and an activation function layer.

25. The method of claim 23, wherein the channel feature mining module comprises: a first sub-module and a second sub-module connected in parallel, a weighted fusion module connected to an output end of the first sub-module and an output end of the second sub-module, an activation layer connected to the weighted fusion module, an operation component connected to the activation layer and used for a dot product operation, wherein the operation component is further connected to input ends of the first sub-module and the second sub-module;

   the input ends of the first sub-module and the second sub-module are used to receive the coarse-grained CSI information matrix;
   the first sub-module comprises an average pooling layer and at least one fully connected layer connected in series;
   the second sub-module comprises a maximum pooling layer and at least one fully connected layer connected in series;
   wherein, the fully connected layer in the first sub-module and the fully connected layer in the second sub-module share parameters.

26. The method of claim 23, wherein the fusion learning module comprises: a fusion module and one composite convolution layer connected in series, and the composite convolution layer is a combination layer comprising a convolution layer, a normalization layer and an activation function layer.

27. The method of claim 22, wherein the recast network comprises: one composite convolution layer and a non-linear activation function layer connected in series, and the composite convolution layer is a combination layer comprising a convolution layer, a normalization layer and an activation function layer.

28. The method of any of claims 21-27, further comprising:
   training the multi-feature neural network.

29. A communication apparatus, configured in a terminal, comprising:

   a processing module, configured to: obtain a channel state information (CSI) information matrix; determine a feature map and a position map of the CSI information matrix; determine a feature position map based on the feature map, the position map, and a normalized power of the feature map, wherein elements in the feature position map indicate element values in the CSI information matrix and positions of the element values in the CSI information matrix; and
   a transceiver module, configured to feed back the feature position map and the normalized power to a base station.

30. A communication apparatus, configured in a base station, comprising:

a transceiver module, configured to obtain a feature position map and a normalized power fed back by a terminal, wherein elements in the feature position map indicate element values in a channel state information (CSI) information matrix and positions of the element values in the CSI information matrix; and
a processing module, configured to: determine a feature map and a position map based on the feature position map and the normalized power, determine a coarse-grained CSI information matrix based on the feature map and the position map; and restore the CSI information matrix based on the coarse-grained CSI information matrix.

31. A communication apparatus, comprising a processor and a memory for storing a computer program, wherein when the computer program stored in the memory is executed by the processor, the apparatus is caused to implement the method of any one of claims 1 to 11, or to implement the method of any one of claims 12 to 28.

32. A communication apparatus, comprising a processor and an interface circuit, wherein

the interface circuit is configured to receive code instructions and transmit the code instructions to the processor; and
the processor is configured to execute the code instructions to implement the method of any one of claims 1 to 11 or to implement the method of any one of claims 12 to 28.

33. A computer-readable storage medium for storing instructions, wherein when the instructions are executed, the method of any one of claims 1 to 11 or the method of any one of claims 12 to 28 is implemented.

Network
device 11

Terminal 12

FIG. 1

obtaining a channel state information (CSI) information matrix — 201

determining a feature map and a position map of the CSI information matrix — 202

determining a feature position map based on the feature map, the position map and a normalized power of the feature map — 203

feeding back the feature position map and the normalized power to the base station — 204

FIG. 2a

pooling step size
Pstride

feature map F

feature
normalization
module

normalized
power p

CSI
information
matrix

maximum
pooling
module

normalized
feature map

splicing

feeding back
through a
feedback link

position map P

position
embedding
module

feature
position
vector

feedback
codeword s

FIG. 2b

| obtaining a feature position map and a normalized power fed back by a terminal | 301 |

↓

| determining a feature map and a position map based on the feature position map and the normalized power, and determining a coarse-grained CSI information matrix based on the feature map and the position map | 302 |

↓

| restoring the CSI information matrix based on the coarse-grained CSI information matrix | 303 |

FIG. 3a

normalized power
p

power expanding module

feature map F

pooling step size
Pstride

unpooling module

feedback link

feedback codeword s

feature position vector v

normalized feature map

position separating module

position map P

coarse-grained CSI information matrix

FIG. 3b

FIG. 3c

401

training a multi-feature neural network

FIG. 4

communication apparatus

processing module

transceiver module

FIG. 5

communication apparatus

processing module

transceiver module

FIG. 6

700

communication apparatus

701

processor

703

computer
program

702

memory

704

computer
program

705

transceiver

receiver

transmitter

707

interface circuit

706

antenna

FIG. 7

801

processor

802

interface

803

memory

FIG. 8

## INTERNATIONAL SEARCH REPORT

| International application No. |
| --- |
| **PCT/CN2022/113738** |

| A. | CLASSIFICATION OF SUBJECT MATTER |
| --- | --- |

H04L 27/00(2006.01)i

According to International Patent Classification (IPC) or to both national classification and IPC

| B. | FIELDS SEARCHED |
| --- | --- |

Minimum documentation searched (classification system followed by classification symbols)

IPC: H04L

Documentation searched other than minimum documentation to the extent that such documents are included in the fields searched

Electronic data base consulted during the international search (name of data base and, where practicable, search terms used)

CNTXT, DWPI, ENTXTC, CNKI, CJFD: 信道状态信息, CSI, 矩阵, 特征, 值, 位置, 行, 列, 图, 归一, 功率, 反馈, 池化, 角度, 时延, 重建, channel, state, value, location, row, column, normalization, power, feedback, pooling, angle, latency, reconstruction

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 113938952 A (UNIVERSITY OF MACAU) 14 January 2022 (2022-01-14) abstract, and description, paragraphs [0070]-[0141], and figures 1-8 | 1-33 |
| A | WO 2021129591 A1 (SONY CORPORATION) 01 July 2021 (2021-07-01) entire document | 1-33 |
| A | CN 113381950 A (TSINGHUA UNIVERSITY) 10 September 2021 (2021-09-10) entire document | 1-33 |
| A | 张静 等 (ZHANG, Jing et al.). "基于人工智能的无线传输技术最新研究进展 (An Overview of Wireless Transmission Technology Utilizing Artificial Intelligence)" 电信科学 (Telecommunications Science), No. 08, 31 August 2018 (2018-08-31), entire document | 1-33 |
| A | CN 114567399 A (BEIHANG UNIVERSITY) 31 May 2022 (2022-05-31) entire document | 1-33 |
| A | WO 2020069459 A1 (NOKIA TECHNOLOGIES OY) 02 April 2020 (2020-04-02) entire document | 1-33 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **06 May 2023** | **11 May 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2022/113738**

| Patent document cited in search report | | | Publication date (day/month/year) | Patent family member(s) | | | Publication date (day/month/year) |
|---|---|---|---|---|---|---|---|
| CN | 113938952 | A | 14 January 2022 | None | | | |
| WO | 2021129591 | A1 | 01 July 2021 | CN | 113055981 | A | 29 June 2021 |
| CN | 113381950 | A | 10 September 2021 | None | | | |
| CN | 114567399 | A | 31 May 2022 | None | | | |
| WO | 2020069459 | A1 | 02 April 2020 | None | | | |

Form PCT/ISA/210 (patent family annex) (July 2022)